# EUROPEAN PATENT SPECIFICATION

(11) **EP 0 601 647 B1**
(45) Date of publication and mention of the grant of the patent: **09.04.1997**
(21) Application number: 93203392.1
(22) Date of filing: 03.12.1993
(51) Int. Cl.: G09G 1/16, G09G 5/14

(54) **System for combining multiple-format multiple-source video signals**
System zum Kombinieren von Videosignalen verschiedener Formate und aus verschiedenen Quellen
Système pour la combinaison de signaux vidéo de formats multiples et de sources multiples

(30) Priority: 11.12.1992 EP 92203879
(43) Date of publication of application: 15.06.1994
(73) Proprietor: Philips Electronics N.V., 5621 BA Eindhoven (NL)
(72) Inventor: Gelissen, Johan Hendrik A., c/o Int. Octrooibureau, NL-5656 AA Eindhoven (NL); Van Twist, Robert A. H., c/o Int. Octrooibureau, NL-5656 AA Eindhoven (NL)
(74) Representative: Strijland, Wilfred

(56) References cited:
- EP-A- 0 384 257
- EP-A- 0 431 845
- EP-A- 0 454 414
- GB-A- 2 247 387
- US-A- 4 121 283
- PATENT ABSTRACTS OF JAPAN vol. 17, no. 210 (P-1526) 23 April 1993 & JP-A-04 348 389
- PATENT ABSTRACTS OF JAPAN vol. 16, no. 493 (P-1435) 13 October 1992 & JP-A-04 177 293

## Description

The invention relates to a system for generating a composite image by selectively combining a plurality of simultaneously available video signals with one another on a pixel-by-pixel basis.

Such system is known from U.S. Patent 4,876,600. This prior art reference discloses an apparatus to produce a composite image from information supplied by a plurality of independently and mutually asynchronously operating sources, such as TV cameras, mass storage for digital image data and raster graphic generators. The sources provide the information to a plurality of dual-ported buffers. The data stored in the buffers are read in a synchronized manner. A pre-programmed mask storage selects on a pixel-by-pixel basis which one of the buffers is to supply the information for a given pixel of the composite image. The mask storage furnishes control data words that each comprise a number of bits equal to that of the number of sources to be handled. That is, the data width which may be read in parallel corresponds exactly to the number of sources. One bit is set per data word to achieve this selectivity feature.

The prior art reference does not address the problem of signals that are mutually differently formatted. Generally, video signals occur in an analog representation, such as certain TV signals, or in a digital representation such as computer-generated graphics. In addition, each such representation may have its information contents be encoded in a variety of ways, dependent on the signal's intended use (display, editing, storage, transmission, etc.). Following video signal types are mentioned here by way of example: compressed still images (JPEG), uncompressed still images, compressed moving images (MPEG), uncompressed moving images (PAL, NTSC, SECAM, D2MAC, HDMAC, YUV, Y/C, RGB, RS170A, RS330), video patterns, etc. The video signals and the graphics are necessarily to be reformatted in a common format before they can be simultaneously displayed on a same display, e.g., a PC's monitor.

The format issue briefly touched upon above may serve to indicate that selectively combining on a real-time basis a plurality of differently formatted, simultaneously available and mutually asynchronous video signals with one another and/or with computer-generated graphics gives rise to a non-trivial handling of data.

It is an object of the invention to provide a system for combining a plurality of video signals with one another, wherein real-time processing is feasible for practically an unlimited number of simultaneously available video signals from different sources, irrespective of their formats. It is another object of the invention to support a modular approach with regard to the organization of operations to be performed and regarding system architecture.

To achieve these goals, the invention provides a system for creating a composite image by selectively combining a plurality of simultaneously available video signals with one another on a pixel-by-pixel basis. The system comprises input means, operative to receive the plurality of video signals, each respective one of the video signals having a respective video format, and encoding means connected to the input means for encoding respective ones of the video signals into data items provided at an encoder output. Each particular one of the data items corresponds to a particular source pixel and functionally has a colour identifier to identify a colour of the particular source pixel and a format identifier to identify the respective video format. The system further includes multiplexing means having a multiplexing input coupled to the encoder output for transferring a selected one of the data items to a multiplexing output, and memory means for storage of the selected data item. The memory means has a memory input coupled to the multiplexing output and has a memory output. The system also includes decoding means coupled to the memory output to receive the selected data item and to decode the colour identifier of the selected data item for determining a colour of a specific one of destination pixels of the composite image under control of the format identifier of the selected data item.

In the invention, source pixels are extracted from the video signals. The source pixels are represented as data items of a specific kind. Each data item has colour information and format information. The colour of a specific destination pixel of the composite image is determined by selecting one of the data items and decoding the selected data item's colour identifier under control of the selected data item's format identifier. Prior to decoding, the data items are organized in a memory means.

The system of the invention permits a modular architecture. Using the common, predetermined representation of the video signals as data items with colour and with format identifiers uncouples the type and format of the video signals at the input means from the organizational processing in the memory means. Further, any system supported internal format for encoding the data items can be adopted as long as the functionalities of colour key and format key are unambiguously and retrievably defined. The internal format can be adapted to, e.g., the memory organization and processing capabilities of memory management, or to a suitable and predetermined window-based data handling instruction set, or to another kind of preprocessing executed on the uniformly formatted data items. The use of the internal format also renders the system versatile regarding the format of the composite image. The composite image format is to be adapted to the destination device that displays, stores or processes the eventually generated composite image. Changing the destination device's format may occur, for example, when a monitor of one type, used for display of the composite image, is replaced by a monitor of another type. The replacement may need adaption to, e.g., the physical characteristics of the new monitor, due to the particular phosphor compounds used in the monitor's screen ("gamma-correction"). Changing the format of the composite image is achieved through the decoding means, again without interfering with the organizational processing in the memory means.

The system is readily modified to handle a larger number of simultaneously available video signals by appropriately extending the encoding means and the decoding means and the capability of the multiplexing means. In order to enhance the system's modularity, the multiplexing means preferably includes a bus means for under control of a selection protocol transferring the selected one of the data items to the decoding means.

The format identifier may functionally be the same as a video source identifier when each individual video source supplies video signals of only a single video format. Also, the number of bits used to encode the colour information per source pixel may depend on the specific type of video signal to be encoded. This may stem from the fact that a video signal of a particular type needs fewer bits per source pixel to represent the pixel's available colour information than a video signal of another type. By providing adequate memory management means to handle variable word lengths, an efficient use is made of the available memory space.

Preferably, the system of the invention is operative to selectively combine the video signals with computer-generated graphics data on a pixel-by-pixel basis. To this end, the system comprises control means for specifying whether the plurality of video signals or the computer-generated graphics data is to determine the colour of the specific destination pixel, and further multiplexing means coupled between the memory means and the decoding means for determining the colour of the specific destination pixel under control of the control means. The further multiplexing means either transfers the colour identifier supplied by the memory means to the decoding means and transfers the graphics data to the decoding means for decoding the colour identifier under control of the graphics data, the latter functioning as the format identifier, or transferring the graphics data to the decoding means for being decoded.

The memory means of the system in the invention comprises a colour identifier section to store the colour identifier of the selected data item, and a format identifier section to store the format identifier of the selected data item. If the system includes a graphics data generator, such as a PC, preferably at least the format identifier section or the control means is implemented as a functional part of the graphics generator. In the system of the invention, the memory means has a source identifier section to store a source identifier for control of the first-mentioned multiplexing means. The source identifier section then also preferably is implemented as a functional part of the graphics generator.

Accordingly, the invention furnishes a system that permits combining video signals of various formats with computer generated graphics, preferably in window-based representation.

The invention is explained in more detail by way of example and with reference to the accompanying drawing, wherein:
Figures 1 and 2 disclose a first example of a system in the invention;
Figures 3 and 4 illustrate a second example of a system in the invention; and
Figures 5 and 6 show a third example of a system in the invention.

Throughout the Figures, same reference numerals are used to indicate similar or corresponding features.

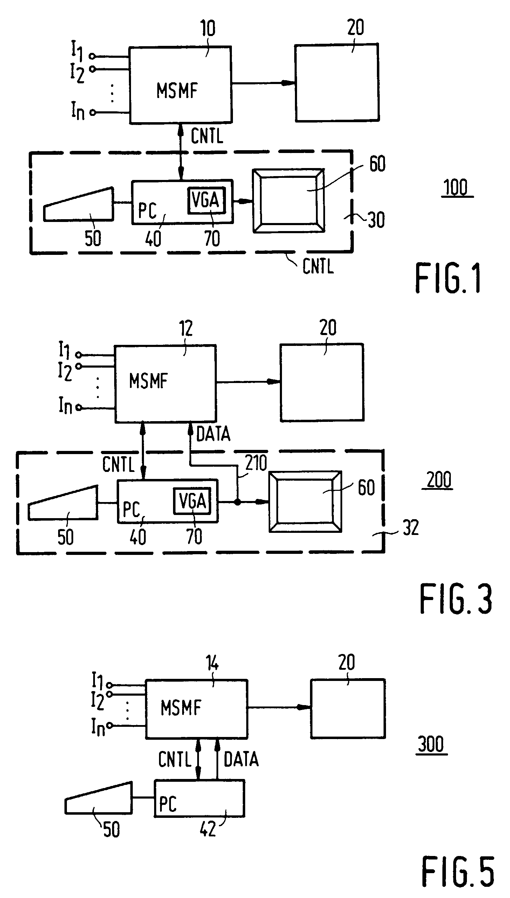

Figures 1-6 illustrate examples of a system according to the invention. The system creates a composite image out of a plurality of simultaneously available video signals I1, I2, ..., In. Video signals I1-In may have mutually different video formats. The composite image is a pattern of destination pixels that each have a particular colour or grey level. The pattern is determined by selection of the video signals I1-In on a pixel-by-pixel basis. For each of the destination pixels one of the video signals I1-In is selected to supply a source pixel whose colour or grey level information then is to be mapped onto the destination pixel.

The video signals may be originated in, e.g., TV receivers, VCRs, video cameras, video disks, etc. The video signals may include the following types and formats: compressed still images (JPEG), uncompressed still images, compressed moving images (MPEG), uncompressed moving images (PAL, NTSC, SECAM, D2MAC, HDMAC, YUV, Y/C, RGB, RS170A, RS330). The signals may also be supplied by a video pattern generator or synthesizer.

Figure 1 shows a first example of a system **100** in the invention. System **100** comprises a multiple-source-multiple-format signal processing device (MSMF) **10** for generating a composite image from a plurality of simultaneously available video signals I1-In of one or more video formats. The composite image is transferred to an image destination device **20**, such as a memory or a monitor. Operation of MSMF **10** is controlled by a data processing apparatus **30**. Apparatus **30** may comprise a PC **40** provided with a user-interface **50**, such as a keyboard or a mouse, and a display **60** to enable interactive control of the image compilation. PC **40** may comprise a graphics unit **70** having, e.g., a VGA and a RAM to store graphics data.

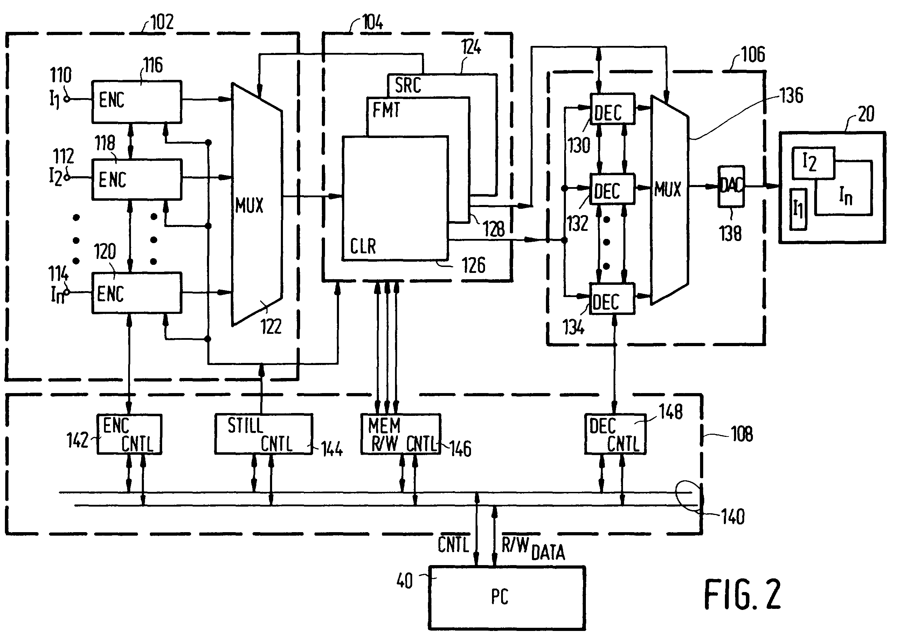

Figure 2 shows MSMF **10** in more detail. MSMF **10** comprises the following functionalities: an encoding section **102**, a display memory **104**, a decoding section **106** and interface means **108** to PC **40**. As explained below, encoding section **102** encodes incoming video signals I1-In into source pixels. The source pixels are supplied in one or more digital representations supported by the internal processing of MSMF **10**. The source pixels comprise colour and video format information. Display memory **104** selectively stores the source pixels in a pattern corresponding to the pattern of destination pixels of the composite image. Decoding section **106** decodes the source pixel's colour information under control of the source pixel's video format information. The decoded colour information is presented in a common digital format for conversion into an analog signal adapted to monitor **20**.

Encoding section **102** comprises a plurality of inputs **110**, **112**, ..., **114** to receive video signals I1-In, each having its individual video format. The received video signals I1-In are respectively supplied to encoders **116**, **118**, ..., **120** to encode each of video signals I1-In into respective sequences of digital words of one or more internal representations, adapted to the data processing capability of MSMF **10**. A multiplexing means **122** selectively transfers the words supplied by encoders **116**-**120** to display memory **104**.

Encoders **116**-**120** each include a memory (not shown) of the DRAM-, VRAM- or TVRAM-type to store the encoded signals. In addition, these memories take care of the difference in the rates of pixel information supplied to the encoder's output and pixel information derived from the video signal received. The video information typically includes an analog signal sequence based on a given scan rate and provided with identifiers (sync pulses) to indicate individual video lines that make up a complete video image (frame) and to indicate individual frames. The monitor, onto which the video signals are to be displayed simultaneously, may have a different scan rate. Scan rate conversion then is to be accomplished to adapt the supply of video images to the monitor's operation. In addition, time base correction is required to remove time-skewing between the monitor's lines and frames on the one hand and the start of the video line and of the video frame on the other hand.

The memories permit digital words from different ones among encoders **116**-**120** to be read out on the same time basis. The memory may be a DRAM, but preferably is a VRAM (video RAM) or TVRAM (triple-ported VRAM). As known, a VRAM is a random-access-memory that has a bidirectional random access data port and a bidirectional sequential access data port. Multiple-ported RAMs such as VRAMs and TVRAMs are faster than ordinary DRAMs and are very useful in video applications due to high-speed capabilities and due to the fact that video data usually are sequentially organized in pixels and lines. The VRAM is written according to an address pattern that corresponds to the scan pattern of the video image to be stored. That is, a sequence of lines of consecutive pixels of the image to be stored is mapped onto a group of memory cells of the VRAM that have logically adjacent memory addresses. The VRAM is read via a shift register that periodically is reloaded with the contents of such a group of cells to furnish the line's pixels consecutively. Reading and writing of the VRAM can be done at mutually different time rates. A TVRAM further is adapted to be written and read at the same moment, it being provided with two (or more) shift registers to retrieve and enter pixel data in line fashion.

Each word provided by encoders **116**-**120** represents a source pixel derived from the associated video signal and includes several bits, a first part whereof contains encoded colour or grey level information for that source pixel, and a second part whereof specifies the video format of the video signal to serve as a key for eventually decoding the first part later on. Conversion of an analog video signal such as a TV signal into a sequence of digital pixels is known in the art. Note, however, that in the invention the pixel's digital colour information is combined with an identifier for the associated video format, and the combination is provided in a digital representation supported by MSMF **10**.

Display memory **104** receives the digital words from multiplexing means **122** on a pixel-by-pixel basis and functionally comprises following sections: a source information section **124**, a colour information section **126** and a format indicating section **128**. Source information section **124** specifies in advance for each destination pixel of monitor **20** which one of video signals I1-In is to be selected to produce the source pixel for mapping onto the destination pixel. Section **124** controls the operation of multiplexing means **122**. Colour information section **126** stores for each destination pixel the first part of the digital word received from multiplexing means **122**, i.e., the colour information of the selected source pixel. Format indicating section **128** stores for each destination pixel the second part of the digital word received from multiplexing means **122**, i.e., the video format indication for the selected source pixel.

Display memory **104** may be implemented in various ways and may include a DRAM (dynamic RAM), a VRAM or a TVRAM. Such RAMs may be physically organized in several banks to increase storage capacity and access speed. Note that the speed per bank can be reduced when bank-switching techniques are applied, such as storing data for subsequent destination pixels in logically contiguous banks. Colour information section **126** and format indicating section **128** are preferably implemented with a one or more TVRAMs in view of the required fast-in-fast-out behaviour (high update rate). Source information section **124** preferably is implemented with one or more ordinary VRAMs or DRAMs, since updating of section **124** is typically done at a substantially lower rate than the updating of sections **126** and **128**.

Encoders **116**-**120** may be adapted to encode video signals received at inputs **110**-**114** in internal representations that are mutually different. That is, encoders **116**-**120** may be made programmable to handle words of various widths. The number of bits used to encode the colour information per source pixel may be variable depending on the type of video signal to be encoded. This may stem from the fact that a video signal of a particular type needs fewer bits per source pixel to represent the pixel's available colour information than a video signal of another type. By providing section **126** in addition with adequate memory management means (not shown) to handle variable word lengths, an efficient use is made of the available memory space.

Decoding section **106** receives the colour information parts of the source pixels stored in section **126** and handles the conversion of the digital colour information into the analog format of monitor **20**. Decoding section **106** comprises a plurality of decoders **130**, **132**, ..., **134**. Each different one of decoders **130**-**134** operates on the digitally encoded colour information parts of a different video format. Therefore, when section **126** produces a colour information part of a source pixel, section **128** supplies the associated format information part of that source pixel to select the associated one of decoders **130**-**134**.

For instance, format indicating section **128** may specify the colour information bits received by decoding section **106** from section **126** to be an encoded representation of a pixel created from an analog signal in YUV format at one of inputs **110**-**114**. The appropriate one of decoders **130**-**134** is selected to operate on that representation. The operation involves interpreting the colour information bits as encoded YUV information and converting this information into a decoder output signal, whose format is adapted to the video format of monitor **20**, e.g. analog RGB. The conversion requires a dedicated YUV/RGB converter that performs the true-colour space conversion to produce the RGB from the YUV. The decoder output signal is transferred by multiplexing means **136** to monitor **20** under control of format indicating section **128**.

In another example, format indicating section **128** may specify the colour information bits received by decoding section **106** from section **126** to be an encoded representation of a pixel created from an analog signal in an RGB format at one of inputs **110**-**114**. The appropriate one of decoders **130**-**134** is selected to operate on that representation. The operation involves interpreting the colour information bits as encoded RGB information and converting this information into an RGB decoder output signal, whose format is adapted to the video format of monitor **20**. The RGB video signal at one of inputs **110**-**114** may need adaption to the physical characteristics of monitor **20**, due to the particular phosphor compounds used in the monitor's screen. This may be taken care of by a dedicated RGB/RGB decoder. This kind of operation is termed "gamma-correction".

In still another example, format indicating section **128** may specify the colour information bits received by decoding section **106** from section **126** to be an encoded representation for the colour of a destination pixel created from a signal at one of inputs **110**-**114** that does not represent a colour or a grey level. This may be the case for data that are not directly related to visual perception. Examples are spatial temperature distribution, spatial humidity distribution, topologic surface characteristics or other parametrized features, e.g., as obtained by remote sensing techniques from satellites, that are to be visualized. These data may be rendered visually perceptible by creating a plurality of parameter ranges for the feature to be visualized and displaying the feature's spatial distribution by means of a spatial colour distribution, a particular colour corresponding to a particular parameter range. This display technique employs pseudo-colours. In such pseudo-colour application, an appropriate one of decoders **130**-**134** is selected by section **128**. The selected decoder is a pseudo-colour decoder and interprets the colour information bits from section **126** as encoded non-colour information that is to be converted into a colour output signal, whose format is adapted to the video format of monitor **20**. This interpretation and conversion may be accomplished by the decoder through a colour-look-up-table (CLUT).

Preferably, the output signals supplied by decoders **130**-**134** are digital signals, since multiplexing digital signals is simpler than multiplexing analog signals. A digital-analog converter (DAC) **138** then is provided between an output of multiplexing means **136** and monitor **20**.

In the example shown in Figure 2, encoding section **102**, decoding section **106** and display memory **104** are controlled by PC **40** via an interface means **108**. Interface means **108** comprises a bus **140** for read/write data transport and control data transport. Bus **140** is connected to an encoding control unit **142**, a still-picture control unit **144**, a memory control unit **146** and a decoding control unit **148**.

Encoding control unit **142** serves to control the operation of encoders **116**-**120**. For instance, a modification of the encoding operation for one or more of encoders **116**-**120** may be introduced via unit **142** in case the video format of one or more of video signals I1-In is changed. Alternatively, unit **142** may introduce a modified encoding procedure into encoders **116**-**120**, for example, when display memory **104** is replaced by a smaller display memory. Data compression techniques or lower resolution encoding may then be introduced via unit **142**.

Decoding control unit **148** controls the operation of decoding section **106**. For instance, unit **148** may modify the CLUT in the appropriate one of decoders **130**-**134** for changing the pseudo-colour representation. Alternatively, unit **148** may adapt the decoding procedure, for example when monitor **20** is replaced by another one of another type. As mentioned above, "gamma-correction" may be required to correctly adjust the shades of the colours used.

Memory control unit **146** controls the operation of display memory **104**. Source information section **124** may be programmed via unit **146**. The words stored at particular addresses of section **126** and section **128** may be retrieved via unit **146** under PC **40** control for processing or monitoring in PC **40**. A further application may be to selectively store words supplied by PC **40** via unit **146** in section **126** and/or in section **128**.

Still-picture control unit **144** is provided to selectively prevent writing in address regions of section **126** and/or in section **128** in order to maintain the stored information. Accordingly, since display memory **104** locally remains unchanged, one or more still pictures are created in areas on monitor **20** that corresponds to the selected address regions of sections **126** and/or **128**. Unit **144** may be operated upon by PC **40** via bus **140**, for instance, for storage of information specifying which ones of the destination pixels of the composite image in monitor **20** are to be kept still. Unit **146** may directly control display memory **104** by selectively preventing memory locations from being overwritten. This may be useful when handling a one-time-only video signal, i.e., once the video signal has supplied a complete image, the signal is terminated. Alternatively, unit **144** may control encoders **116**-**120** by selectively putting the encoding procedure on hold. Encoders **116**-**120** may be provided with a memory function to store the encoded information prior to supplying the encoded information to multiplexing means **122**. Stopping encoding then does not produce new pixel information, and the same pixels stored in encoders' **116**-**120** memories are provided during each new composite-image-cycle. Encoders' **116**-**120** memories then are adapted to supply the same pixels more than once.

In another embodiment, still-picture control unit **144** may control the storing of source pixels in display memory **104** by selectively assigning a "valid" flag or an "invalid" flag to a source pixel provided by multiplexing means **122**. If the current source pixel is "valid", display memory accepts the source pixel to be stored at a predetermined address. If, on the other hand, the current source pixel is said to be "invalid", it is discarded and display memory **104** retains the information already stored at the predetermined address.

PC **40** may provide appropriate clocking to run encoding section **102**, display memory **104**, decoding section **106** and interface means **108**.

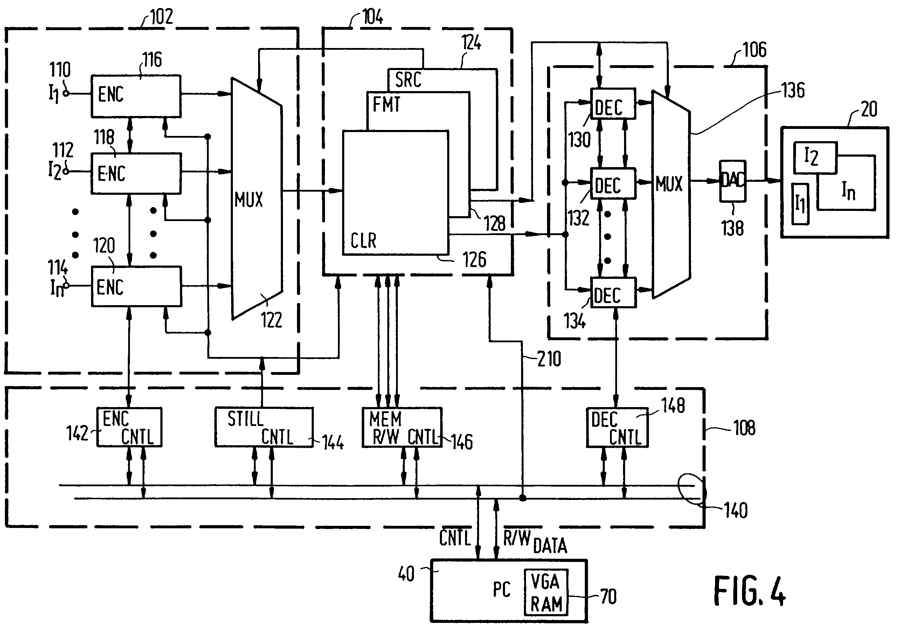

Figures 3 and 4 disclose a second example of a system **200** according to the invention. Features that correspond to those already discussed under Figure 1 are denoted by the same reference numerals. System **200** now specifically combines video signals I1-In with one another and with computer-generated graphics data provided at a graphics bus **210** (feature bus) of, e.g., PC **40**, via an MSMF **12**, slightly different from MSMF **10** discussed above.

In Figures 3 and 4, PC **40** has a supervisory function as discussed under Figures 1 and 2 and, in addition, serves to supply graphics data to be selectively combined on a pixel-by-pixel basis with video signals I1-In. Functionally, the graphics data can be handled similarly to video signals I1-In. That is, the graphics data could be routed to, e.g., input **114** of encoder **120** in encoding means **102** of Figure 2, provided that encoder **120** is adapted to handle graphics data. This option would not need a VGA **70** physically present in PC **40** as the encoder could be provided with a VGA. Alternatively, the graphics data could be supplied directly to multiplexing means **122** if the graphics data are already in the appropriate format, thereby avoiding a dedicated encoder. However, graphics data are already available in graphics unit **70** on a random access basis, as contrasted with a raster scan basis of typical video signals. Accordingly, graphics data are suitable to be introduced selectively and directly into display memory **104** via graphics bus **210**, bypassing encoding section **102**.

An appropriate one of decoders **130-134** then is selected, functionally via format indicating section **128** in a similar way as discussed above, in order to convert the graphics data via a CLUT (not shown) into a signal for monitor **20**. This CLUT preferably is programmable, e.g., via decoding control unit 1**48**.

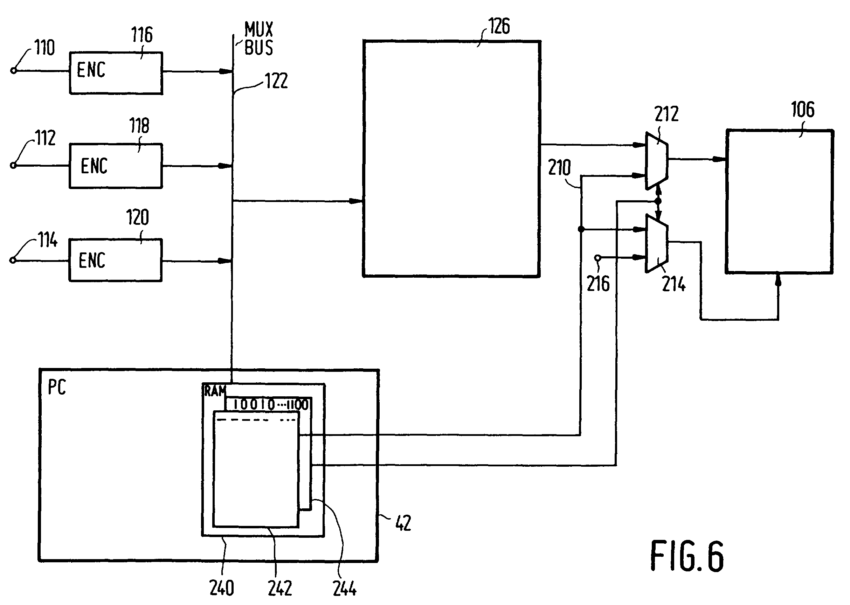

Figures 5 and 6 illustrate a third example of a system **300** in the invention. Since graphics data are generated on a random-access-basis, the memory functionality of graphics unit **70** in Figure 3 may be physically merged with that of display memory **104** in Figure 4. A PC **42** in Figure 5 then does not need a graphics unit with a VGA and with a graphics data memory, since graphics data in a predetermined digital format may directly be stored in display memory **104**. Decoding section **106** then includes an appropriate decoder, say, decoder **134** to transform the graphics information into an output signal to be handled by monitor **20** upon DA conversion in DAC **138**.

Circumventing display memory **104** altogether as far as graphics data storage is concerned is achieved in an alternative embodiment of system **300**, shown in Figure 6. When graphics data are merged with video signals under source- and format-control as discussed above, the graphics data itself may serve both as a displayable data and as a control signal to govern the decoding performed on the colour identifiers supplied by display memory **104**. This is explained as follows.

The graphics data as produced by PC **42** are organized as (N+1)-bit wide words. If the additional bit is a logic "1", then the remaining N bits of the graphics word are to be interpreted as graphics colour information for a particular destination pixel and for being processed by decoding section **106**. If the additional bit is a logic "0", then all or some of the remaining N bits are to be interpreted to control the proper decoding of the colour information supplied display memory **104**.

PC **42** produces (N+1)-bit wide data words in a RAM **240**, functionally organized as an N-bit wide RAM **242** and a single-bit wide RAM **244** whose addresses are correlated. When RAM **244** has a "1" at a particular address, then the word at the corresponding address of RAM **242** denotes a particular colour and is to be decodes as such in decoding section **106**. When RAM **244** has a "0" at a particular address, then the word at the associated address of RAM **242** is to be interpreted as a control signal to select the proper decoding protocol performed in decoding section **106** for the selected data item provided by display memory **104**.

Decoding section **106** selectively handles both graphics data supplied via bus **210** and data items supplied by display memory **104**. To this end, system **300** includes a multiplexer **212** and a multiplexer **214**. Multiplexer **212** transfers either graphics data supplied via bus **210** or data items received from display memory **104** to be decoded by decoding section **106**. Multiplexer **214** transfers either data supplied via bus **210** or data supplied to a multiplexer input **216** in order to select an appropriate decoding protocol. Multiplexers **212** and **214** are controlled via the single bits provided by RAM **244**. When multiplexer **212** is controlled to transfer the data received from display memory **104**, then multiplexer **214** is controlled to transfer the data received via bus **210** to a control input of decoding section **106**, thereby selecting an appropriate one of the decoders (not shown) housed in section **106**. When multiplexer **212** is controlled to transfer the data received via bus **210**, then multiplexer **214** is controlled to transfer the signal at its input **216** to decoding section **106**, thereby selecting the appropriate decoder, e.g., a CLUT (not shown) to interpret the data provided by multiplexer **212** as a colour. The signal at input **216** may be a fixed word, or may be alterable by an external agent, or may be supplied by PC **42**.

In the embodiment of Figure 6, format indicating section **128** of Figure 4 is implemented as RAM **242** in PC **42**. Also, source information section **124** of Figure 4 may be implemented in RAM **240** to control a bus **246** as multiplexer **122** of Figure 4, and to act in concert with RAM **242** serving as format indicating section **128**. Figures 1-6 illustrate some functionalities within the system as separate features. However, two or more of the functionalities may be physically integrated together within a single device of the system.

Note that the term "colour" is used herein to indicate any aspect of an information item that can be made visually perceptible as a pixel. For the purpose of this invention, colour therefore may include aspects such as grey level, shading or any other aspect that serves to visually differentiate image constituents.

## Claims

1. A system for creating a composite image by selectively combining a plurality of simultaneously available video signals with one another on a pixel-by-pixel basis;
the system comprising:
- input means operative to receive the plurality of video signals, each respective one of the video signals having a respective video format;
- encoding means connected to the input means for encoding respective ones of the video signals into data items provided at an encoder output, wherein each particular one of the data items corresponds to a particular source pixel and functionally has a colour identifier to identify a colour of the particular source pixel and a format identifier to identify the respective video format;
- multiplexing means having a multiplexing input coupled to the encoder output for transferring a selected one of the data items to a multiplexing output;
- memory means for storage of the selected data item, having a memory input coupled to the multiplexing output and having a memory output;
- decoding means coupled to the memory output to receive the selected data item and to decode the colour identifier of the selected data item for determining a colour of a specific one of destination pixels of the composite image under control of the format identifier of the selected data item.

2. The system of Claim 1, characterized in that the memory means comprises:
- a colour identifier section to store the colour identifier of the selected data item;
- a format identifier section to store the format identifier of the selected data item.

3. The system of Claim 2, characterized in that the memory means has a source identifier section to store a source identifier for control of the multiplexing means.

4. The system of Claim 1, operative to selectively combine the video signals with computer-generated graphics data on a pixel-by-pixel basis, characterized in that the system comprises:
- control means for specifying whether the plurality of video signals or the computer-generated graphics data is to determine the colour of the specific destination pixel;
- further multiplexing means coupled between the memory means and the decoding means for determining the colour of the specific destination pixel under control of the control means by means of:
- either transferring the colour identifier supplied by the memory means to the decoding means and transferring the graphics data to the decoding means for decoding the colour identifier under control of the graphics data, functioning as the format identifier;
- or transferring the graphics data to the decoding means for being decoded.

5. The system of Claim 4, characterized in that
- the system comprises a graphics data generator; and
- the memory means comprises:
- a colour identifier section to store the colour identifier of the selected data item;
- a format identifier section to store the format identifier of the selected data item;
and wherein the format identifier section is a functional part of the graphics generator.

6. The system of Claim 5, characterized in that the control means is a second functional part of the graphics generator.

7. The system of Claim 5 or 6, characterized in that the memory means has a source identifier section to store a source identifier for control of the multiplexing means, the source identifier section being a functional part of the graphics generator.

## Patentansprüche

1. System zum Erzeugen eines zusammengesetzten Bildes durch selektives Kombinieren von einer Vielzahl gleichzeitig verfügbarer Videosignale miteinander auf einer Pixel-für-Pixel-Basis, wobei das System folgendes umfaßt:
- Eingangsmittel, um die Vielzahl von Videosignalen zu empfangen, wobei jedes der Videosignale ein bestimmtes Videoformat hat;
- mit den Eingangsmitteln verbundene Codiermittel, um die jeweiligen Videosignale in Datenobjekte zu codieren, die am Codierer-Ausgang zur Verfügung stehen, wobei jedes der Datenobjekte einem bestimmten Quellenpixel entspricht und funktionell einen Farbidentifizierer besitzt, um eine Farbe des bestimmten Quellenpixels zu identifizieren, und einen Formatidentifizierer, um das betreffende Videoformat zu identifizieren;
- Multiplexer-Mittel mit einem Multiplexer-Eingang, der mit dem Codierer-Ausgang verbunden ist, um ein ausgewähltes Datenobjekt an einen Multiplexer-Ausgang zu übertragen;
- Speichermittel zum Speichern des gewählten Datenobjektes, wobei das Speichermittel einen Speichereingang hat, der mit dem Multiplexer-Ausgang verbunden ist, und einen Speicherausgang;
- Decodiermittel, die mit dem Speicherausgang verbunden sind, um das gewählte Datenobjekt zu empfangen und den Farbidentitizierer des gewählten Datenobjektes zu decodieren, um eine Farbe eines bestimmten Zielpixels des zusammengesetzten Bildes unter der Steuerung des Formatidentifizierers des gewählten Datenobjektes zu bestimmen.

2. System nach Anspruch 1, dadurch gekennzeichnet, daß das Speichermittel folgendes umfaßt:
- einen Farbidentifizierer-Abschnitt zum Speichern des Farbidentifizierers des gewählten Datenobjektes;
- einen Formatidentifizierer-Abschnitt zum Speichern des Formatidentifizierers des gewählten Datenobjektes.

3. System nach Anspruch 2, dadurch gekennzeichnet, daß das Speichermittel einen Quellenidentifizierer-Abschnitt zum Speichern eines Quellenidentifizierers für die Steuerung des Multiplexer-Mittels besitzt.

4. System nach Anspruch 1 zur selektiven Kombination von Videosignalen mit computer-erzeugten Graphikdaten auf einer Pixel-für-Pixel-Basis, dadurch gekennzeichnet, daß das System folgendes umfaßt:
- Steuermittel, um zu spezifizieren, ob die Vielzahl der Videosignale oder der computer-erzeugten Graphikdaten die Farbe des spezifischen Zielpixels bestimmen soll;
- Multiplexer-Mittel, die zwischen das Speichermittel und das Decodiermittel geschaltet sind, um die Farbe des spezifischen Zielpixels unter der Steuerung des Steuermittels zu bestimmen, und zwar folgendermaßen:
- entweder durch Übertragung des durch das Speichermittel gelieferten Farbidentifizierers an das Decodiermittel und Übertragung der Graphikdaten an das Decodiermittel, um den Farbidentifizierer unter der Steuerung der Graphikdaten zu decodieren, wobei letztere als Formatidentifizierer fungieren;
- oder durch Übertragung der Graphikdaten an das Decodiermittel, um decodiert zu werden.

5. System nach Anspruch 4, dadurch gekennzeichnet, daß
- das System einen Graphikdaten-Generator enthält; und
- das Speichermittel folgendes umfaßt:
- einen Farbidentifizierer-Abschnitt zum Speichern des Farbidentifizierers des gewählten Datenobjektes;
- einen Formatidentitizierer-Abschnitt zum Speichern des Formatidentifizierers des gewählten Datenobjektes;
und wobei der Formatidentifizierer-Abschnitt ein funktioneller Teil des Graphikgenerators ist.

6. System nach Anspruch 5, dadurch gekennzeichnet, daß das Steuermittel ein zweiter funktioneller Teil des Graphikgenerators ist.

7. System nach Anspruch 5 oder 6, dadurch gekennzeichnet, daß das Speichermittel einen Quellenidentifizierer-Abschnitt zum Speichern eines Quellenidentifizierers für die Steuerung des Multiplexer-Mittels besitzt, wobei der Quellenidentifizierer-Abschnitt ein funktioneller Teil des Graphikgenerators ist.

## Revendications

1. Système destiné à créer une image composite en combinant de manière sélective une pluralité de signaux vidéo disponibles simultanément, l'un avec l'autre, sur une base de pixel par pixel,
le système comprenant :
- des moyens d'entrée susceptibles de recevoir la pluralité de signaux vidéo, chaque signal respectif des signaux vidéo ayant un format vidéo respectif;
- des moyens de codage connectés aux moyens d'entrée pour coder des signaux respectifs des signaux vidéo en articles de données délivrés à une sortie du codeur, chaque article particulier des articles de données correspondant à un pixel de source particulier et possédant fonctionnellement un identificateur de couleur pour identifier une couleur du pixel de source particulier et un identificateur de format pour identifier le format vidéo respectif;
- des moyens de multiplexage ayant une entrée de multiplexage couplée à la sortie du codeur pour transférer un article sélectionné parmi les articles de données à une sortie de multiplexage;
- des moyens à mémoire pour stocker l'article de données sélectionné, lesdits moyens à mémoire ayant une entrée de mémoire couplée à la sortie de multiplexage et une sortie de mémoire, et
- des moyens de décodage couplés à la sortie de la mémoire pour recevoir l'article de données sélectionné et pour décoder l'identificateur de couleur de l'article de données sélectionné afin de déterminer une couleur d'un pixel spécifique parmi les pixels de destination de l'image composite sous la commande de l'identificateur de format de l'article de données sélectionné.

2. Système selon la revendication 1, caractérisé en ce que les moyens à mémoire comprennent :
- une section d'identificateur de couleur pour stocker l'identificateur de couleur de l'article de données sélectionné, et
- une section d'identificateur de format pour stocker l'identificateur de format de l'article de données sélectionné.

3. Système selon la revendication 2, caractérisé en ce que les moyens à mémoire ont une section d'identificateur de source pour stocker un identificateur de source pour commander les moyens de multiplexage.

4. Système selon la revendication 1, susceptible de combiner de manière sélective des signaux vidéo avec des données graphiques générées par ordinateur sur une base de pixel par pixel, caractérisé en ce que le système comprend :
- des moyens de commande pour spécifier si la pluralité de signaux vidéo ou les données graphiques générées par ordinateur doivent déterminer la couleur du pixel de destination spécifique;
- d'autres moyens de multiplexage couplés entre les moyens à mémoire et les moyens de décodage pour déterminer la couleur du pixel de destination spécifique sous le contrôle des moyens de commande;
- soit en transférant l'identificateur de couleur délivré par les moyens à mémoire aux moyens de décodage et en transférant les données graphiques aux moyens de décodage pour décoder l'identificateur de couleur sous la commande des données graphiques, jouant le rôle d'identificateur de format;
- soit en transférant les données graphiques aux moyens de décodage pour être décodées.

5. Système selon la revendication 4, caractérisé en ce que :
- le système comprend un générateur de données graphiques, et
- les moyens à mémoire comprennent :
- une section d'identificateur de couleur pour stocker l'identificateur de couleur d'un article de données sélectionné;
- une section d'identificateur de format pour stocker l'identificateur de format de l'article de données sélectionné, et
dans lequel la section d'identificateur de format est une partie fonctionnelle du générateur de données graphiques.

6. Système selon la revendication 5, caractérisé en ce que les moyens de commande constituent une deuxième partie fonctionnelle du générateur de données graphiques.

7. Système selon la revendication 5 ou 6, caractérisé en ce que les moyens à mémoire ont une section d'identificateur de source pour stocker un identificateur de source afin de commander les moyens de multiplexage, la section d'identificateur de source étant une partie fonctionnelle du générateur de données graphiques.
